# EUROPEAN PATENT SPECIFICATION

(11) **EP 2 348 069 B1**
(45) Date of publication and mention of the grant of the patent: **17.04.2013**
(21) Application number: 11151420.4
(22) Date of filing: 19.01.2011
(51) Int. Cl.: C08L 23/16, C08L 23/06, C08L 23/08

(54) **Dimethyl ether-resistant rubber composition**
Dimethyl-Ether-beständige Kautschukzusammensetzung
Composition de caoutchouc résistante à l'éther de diméthyle

(30) Priority: 20.01.2010 JP 2010010037
(43) Date of publication of application: 27.07.2011
(73) Proprietor: NICHIAS CORPORATION, Tokyo 105-8555 (JP); Tokyo University of Agriculture & Technology, Fuchu-shi, Tokyo 183-8538 (JP)
(72) Inventor: Nishimoto, Kazuo, Minato-ku Tokyo 105-8555 (JP); Yamamoto, Mitsuo, Minato-ku Tokyo 105-8555 (JP); Omura, Atsushi, Minato-ku Tokyo 105-8555 (JP); Sawada, Takumi, Minato-ku Tokyo 105-8555 (JP); Toyota, Akinori, Fuchu-shi Tokyo 183-8538 (JP)
(74) Representative: Grünecker, Kinkeldey, Stockmair & Schwanhäusser

(56) References cited:
- EP-A1- 1 152 016
- EP-A1- 1 186 631
- DATABASE WPI Week 199332 Thomson Scientific, London, GB; AN 1993-252985 XP002631422, & JP 5 171097 A (NISHIKAWA GOMU KOGYO KK) 9 July 1993 (1993-07-09)
- DATABASE WPI Week 200761 Thomson Scientific, London, GB; AN 2007-643129 XP002631423, & JP 2007 154014 A (JSR CORP) 21 June 2007 (2007-06-21)

## Description

### TECHNICAL FIELD

The present invention relates to a rubber composition suitable for forming a rubber member used in an apparatus or an instrument which comes into contact with a gaseous or liquid dimethyl ether (hereinafter abbreviated as "DME") in a stage of producing, storing, transporting, supplying or using DME.

### BACKGROUND OF THE INVENTION

Rubber-based sealing material, such as rubber 0-rings, obtained by molding a composition containing synthetic rubber as a main material and rubber chemicals such as a cross linking agent, a cross linking aid and a filling material with a mold or the like under pressure and heating have moderate flexibility, good conformability with joint surfaces and excellent sealing properties. Also, rubber compositions comprising low and high-molecular weight ethylene/α-olefin/non-conjugated diene copolymer rubbers have been proposed for improving the mechanical characteristics at high temperature variations (see e.g. Patent Document 1 Accordingly, rubber-based sealing materials have been widely used in apparatus and instruments in various industries.

Of these various industries, in the LP gas industry, the rubber-based sealing material particularly NBR or fluororubber having good chemical resistance against LP gas, have been heavily used in instruments such as joints of pipes, valves and the like in supply facilities such as primary bases, secondary bases and filling stations or in transport facilities such as ocean-going vessel coastal vessels and tankers (for example, see non-patent document 1).

In Japan, LP gas contains propane and butane as main components, and is easily transported and stored. Accordingly, LP gas is used in about 55% of the total households in Japan, namely in 25,000,000 households, as household energy, and also used in almost all taxis as a fuel for transport applications. Further, LP gas is also widely used for industrial applications such as manufacturing applications including iron and steel manufacture, electric power applications and petrochemical raw material applications. Thus, LP gas becomes indispensable energy for people's lives and industrial economy.

However, about 80 percent of imports of the LP gas depend on the Middle East. Moreover, in recent years, demand for LP gas as a dispersion fuel is rapidly increasing with an increase in the income level in Asian countries such as China and India. This causes a problem that the price of LP gas is constantly stabilized at high level by tight supply and demand thereof.

In view of such situations, trends to find new energy sources have become active, and attention has been focused on DME, because of lower cost of plant construction and capability of effective utilization of smaller gas fields. The DME has a chemical structure as CH₃OCH₃, is generally obtained by the DME synthesis using, as a raw material, synthetic gas (CO₂, H₂) obtained by gasifying natural gas, associated gas, coal or the like, and has a clean characteristic of generating no dust, no SOx and less NOx, when burnt. Accordingly, utilization thereof as a fuel for electric generation, boilers, households, automobiles and the like has been studied. Moreover, the DME is similar in physical properties such as vapor pressure to LP gas, so that it also has an advantage that the infrastructure of LP gas can be utilized, which is economical.

Non-Patent Document 1: "DME Review Meeting" Report, published on Aug, 8, 1996, Petroleum Distribution and Retail Division, Natural Resources and Fuel Department, Agency for Natural Resources and Energy; Liquefied Petroleum Gas Center; and Japan LP Gas Association, pp. 5-6
Patent Document I : European Patent Application No. 1 186 631 A1 .

### SUMMARY OF THE INVENTION

However, DME is chemically classified as an ether, and has characteristics of having high gas permeability to organic compounds such as plastics and rubber and easily swelling or dissolving such organic compounds. Thus, DME has utterly different chemical properties from LP gas composed of propane and butane which are paraffinic hydrocarbons. As described above, NBR or fluororubber has been used in storage tanks or the pipes of LP gas as the sealing materials. However, these rubber materials are low in resistance to DME, so that they are relatively easily eroded.

Specifically, according to experiments of the present inventors, it has become clear that NBR and fluororubber are significantly swelled by contact with DME to increase the permeability of DME ten times or more in comparison with that of LPG, resulting in a fear of failing to fully perform a function as the sealing materials.

While attention has been focused on DME as a major candidate for an alternative fuel of LP gas as described above, it has been urgently necessary to develop a rubber material having high resistance to DME (DME resistance), in order to make it possible to use the infrastructure of LP gas as it is. Then, an object of the invention is to provide a rubber composition for forming a rubber member having resistances to DME and LP gas.

The present inventors have made studies in order to solve the above-mentioned problem. As a result, it has been found out that a rubber composition obtained by blending a ternary copolymer obtained from monomer components comprising ethylene, an α-olefin and a diene compound with a low-molecular-weight polyethylene shows excellent DME resistance and further also has good resistance to LP gas, thus leading to completion of the invention. That is to say, the invention provides the following DME-resistant rubber composition:
(1) A dimethyl ether-resistant rubber composition for forming rubber member used in a part which comes into contact with a gaseous or liquid dimethyl ether, comprising:
   a ternary copolymer obtained from monomer components comprising ethylene, an α-olefin and a diene compound; and
   a low-molecular-weight polyethylene.
(2) The dimethyl ether-resistant rubber composition according to the above (1) wherein the low-molecular-weight polyethylene has a viscosity average molecular weight of 1,000 or more and 15,000 or less, and is present in an amount of 5 to 50 parts by weight based on 100 parts by weight of the ternary copolymer.
(3) The dimethyl ether-resistant rubber composition according to the above (1) or (2), wherein the ternary copolymer has an ethylene content of 55% by mass or more based on the whole monomer components.
(4) The dimethyl ether-resistant rubber composition according to any one of the above (1) to (3), wherein the α-olefin is propylene.
(5) A rubber member comprising the dimethyl ether-resistant rubber composition according to any one of the above (1) to (4).

The DME-resistant rubber composition of the invention is excellent in resistance to DME and further to Liquefied Petroleum gas (LP gas), and therefore suitable as a material for forming rubber members such as O-rings, gaskets, packings, oil seals, diaphragms, hoses and rubber stoppers of apparatus or instruments, particularly sealing materials, which come into contact with DME and LP gas.

### DETAILED DESCRIPTION OF THE INVENTION

The invention will be described in detail below.

The DME-resistant rubber composition of the invention is a rubber composition obtained by blending a ternary copolymer obtained from monomer components comprising ethylene, an α-olefin and a diene compound with a low-molocular-weight polyethylene.

Examples of the α-olefins in the ternary copolymer include propylene, butene-1, hexene-1, octene-1 and the like. The α-olefin may be used alone or in combination of two or more thereof. Examples of the diene compound include ethylidene norbornene, vinyl norbornene and the like. There kinds of the diene compound, which are dicyclopentadiene (DCPD), 5-ethylidene-2-norbomene (ENB) and 1,4-hexadiene (1,4-HD), have been used industrially. The diene compound may be used alone or in combination of two or more thereof. In the present invention, the α-olefin excludes the diene compound. Among the ternary copolymer, ethylene-propylene-diene rubber (hereinafter, abbreviated as "EPDM") in which the α-olefin is propylene is preferred because it is easily available from the market. Further, the ethylene content in the monomer components is preferably 55% by mass or more, and more preferably 60% by mass based on the whole monomer components. Moreover, the ethylene content in the monomer components is preferably not more than 75% by mass, and more preferably not more than 70% by mass based on the whole monomer components. The DME-resistant rubber composition of the invention may contain one or two or more of ternary copolymer.

In the present invention, the "low-molecular-weight polyethylene" means polyethylene having a viscosity average molecular weight of 1,000 to 15,000. Polyethylene having a viscosity average molecular weight of 1,000 to 10,000 is more preferred. When polyethylene having a viscosity average molecular weight of less than 500 is used, polyethylene is eluted in DME. This is therefore unfavorable. On the other hand, when polyethylene having a viscosity average molecular weight of more than 15,000 is used, the rubber composition becomes too rigid, and when applied to a sealing material such as an O-ring, the sealing performance becomes insufficient. This is therefore unfavorable.

The low-molecular-weight polyethylene is present in the rubber composition preferably in an amount of 5 to 50 parts by weight, more preferably in an amount of 10 to 45 parts by weight, and further preferably in an amount of 10 to 30 parts by weight based on 100 parts by weight of the ternary copolymer. Less than 5 parts by weight may result in an increase in swelling due to DME, whereas more than 50 parts by weight may result in losing rubber elasticity of the rubber composition as a whole, giving only resinous properties.

Further, it is preferred to add at least either one of: fillers other than the low-molecular-weight polyethylene; and plasticizers to the DME-resistant rubber composition of the invention.

As the plasticizers, there can be used process oils, synthetic plasticizers and the like which are used in common rubber compositions. Above all, synthetic plasticizers such as phthalic acid derivatives and adipic acid derivatives are preferred. It is preferred to incorporate these plasticizers in an amount of 1 to 80 parts by weight, preferably 5 to 50 parts by weight, based on 100 parts by weight of the ternary copolymer. The swelling rate of the rubber deceases with an increase in the amount of the plasticizer incorporated, but meanwhile the plasticizer becomes liable to breed out on a surface of the rubber.

However, the strength of a molded body obtained by cross linking molding decreases with an increase in the amount of the plasticizer incorporated, so that it is preferred to add a filler other than the low-molecular-weight polyethylene in an amount of 20 to 200 parts by weight, preferably 25 to 100 parts by weight, based on 100 parts by weight of the ternary copolymer, thereby compensating for the decreased strength, As the filler other than the low-molecular-weight polyethylene, there can be used carbon black, white carbon and the like which have been conventionally used for improving the characteristics of rubber compositions. Above all, it is preferred to incorporate a blend of FEF carbon, SRF carbon, FT carbon and MT carbon.

Further, a cross linking chemical may be added to the DME-resistant rubber composition of the invention. As the cross linking chemical, there can be used sulfur-based cross linking agents, cross linking accelerators, cross linking acceleration aids, co-cross linking agents and the like which have been conventionally used for cross linking rubbers. Further, an organic peroxide or the like which is used in the case of peroxide vulcanization can also be used.

Furthermore, various additives such as antioxidants, antiscorching agents, peptizing agents, foaming agents, tackifiers and coloring agents which have been conventionally used in rubber compositions may be added in appropriate amounts in accordance with physical properties or characteristics required for the desired rubber member.

The rubber member comprising the DME-resistant rubber composition of the invention can be produced by usual production methods of rubber products. That is to say, the rubber composition can be kneaded by an open roll, a press kneader, a Banbury mixer or the like, and molded to a desired shape by a method such as hot press molding using a mold, extrusion molding, blow molding, transfer molding or injection molding.

As for molding conditions, it is preferred to perform heating at 130 to 190°C for 2 to 30 minutes as primary cross linking. Less than 130°C may result in prolonged curing time to cause poor industrial productivity, whereas exceeding 190°C may result in occurrence of scorch or reversion. More preferably, the heating temperature is from 140 to 180°C.

Further, particularly in the case of being used as the sealing material, the rubber composition may be heat treated at 100 to 200°C for about 1 to 20 hours to perform secondary cross linking, in order to improve the sealing properties. The condition of secondary cross linking as used herein are preferably conditions under which compounding ingredients such as the plasticizer do not volatilize so as not to impair the shape of the molded body.

### EXAMPLES

The present invention will be specifically described with reference to the following Examples and Comparative Examples.

### (Example 1)

As shown in Table 1, an EPDM having an ethylene content of 67% by mass based on the whole monomer components ("EP51" manufactured by JSR Corporation) was mixed with a low-molecular-weight polyethylene having a viscosity average molecular weight of 4,000 ("HW 400P" manufactured by Mitsui Chemicals, Inc.) in proportions of 90% by mass of the EPDM and 10% by mass of the low-molecular-weight polyethylene based on the total amount of the EPDM and the low-molecular-weight polyethylene, and the mixture was melt kneaded by a press kneader at 150°C. Then, taking the total of the EPDM and the low-molecular-weight polyethylene as 100 parts by weight, 60 parts by weight of a filler (MT carbon), 1 part by weight of a processing aid (stearic acid), 6 parts by weight of a cross linking agent ("Perhexa 25B-40" manufactured by NOF CORPORATION.; 2,5-dimethyl-2,5-di(t-butylperoxy)hexane), 2 parts by weight of a co-cross linking agent (triallyl isocyanurate (manufactured by Nihon Kasei Co., Ltd)) and 1 part by weight of an antioxidant ("Nocrac CD" manufactured by OUCHI SHINKO CHEMICAL INDUSTRIAL Co., Ltd.; 4,4'-bis(α,α-dimethylbenzyl)diphenylamine) w:re added thereto, followed by mixing using a mixing roll at room temperature. Thereafter, the kneaded product was subjected to cross linking molding at 180°C for 10 minutes to obtain a rubber sheet.

### (Example 2)

A rubber sheet was prepared by the same operation as in Example 1 with the exception that the amount of the low-molecular-weight polyethylene was changed to 20% by mass, as sown in Table 1.

### (Example 3)

A rubber sheet was prepared by the same operation as in Example 1 by the formulation shown in Table 1 using an EPDM having an ethylene content of 62% by mass ("EP107" manufactured by JSR Corporation) and the same low-molecular-weight polyethylene as in Example 1.

### (Example 4)

A rubber sheet was prepared by the same operation as in Example 1 by the formulation shown in Table 1 using the EPDM having an ethylene content of 67% by mass ("EP51" manufactured by JSR Corporation) and a low-molecular-weight polyethylene having a viscosity average molecular weight of 8,000 ("HW 800P" manufactured by Mitsui Chemicals, Inc.).

### (Comparative Example 1)

A rubber sheet was prepared by the same operation as in Example 1 by the formulation shown in Table 1 using the EPDM having an ethylene content of 67% by mass ("EP51" manufactured by JSR Corporation) and a low-molecular-weight polyethylene having a viscosity average molecular weight of 900 ("HW 100P" manufactured by Mitsui Chemicals, Inc.).

### (Comparative Example 2)

A rubber sheet was prepared by the same operation as in Example 1 with the exceptions that an EPDM having an ethylene content of 53% by mass ("EP33" manufactured by JSR Corporation) was used and that no low-molecular-weight polyethylene was incorporated.

### (DME Immersion Test)

A test piece was cut out from each rubber sheet, and immersed in DME in an autoclave at 23°C for 48 hours. Thereafter, the test piece was taken out from the autoclave, and the rate of volume change thereof and the rate of weight loss thereof after immersion were determined. The results thereof are shown in Table 1.

As can be seen from Table 1, the rubber sheets of the Examples according to the present invention are small in swelling after DME immersion, and excellent in DME resistance, compared to the rubber sheets of the Comparative Examples.

**[Table 1]**

| | Example 1 | Example 2 | Example 3 | Example 4 | Comparative Example 1 | Comparative Example2 |
|---|---|---|---|---|---|---|
| Ethylene Content of EPDM (% by mass) | 67 | 67 | 62 | 67 | 67 | 53 |
| Viscosity Average Molecular Weight of Low-Molecular- Weight Polyethylene | 4,000 | 4,000 | 4,000 | 8,000 | 900 | - |
| EPDM* | 90 | 80 | 80 | 80 | 80 | 100 |
| Low-Molecular- Weight Polyethylene^{.} | 10 | 20 | 20 | 20 | 20 | 0 |
| Filling Agent (MT Carbon)** | 60 | 60 | 30 | 30 | 60 | 60 |
| Processing Aid (Stearic Acid)** | 1 | 1 | 1 | 1 | 1 | 1 |
| Cross linking Agent (Peroxide)** | 6 | 6 | 6 | 6 | 6 | 6 |
| Co-Cross linking Agent (TAIC)** | 2 | 2 | 2 | 2 | 2 | 2 |
| Rate of Volume Change after DME Immersion (%) | 27 | 22 | 23 | 24 | 25 | 38 |
| Rate of Weight Decrease (%) | 3.0 | 3.0 | 3.3 | 1.9 | 7.4 | 1 |

| | | | | | | |
|---|---|---|---|---|---|---|
| *) The blending ratio of EPDM and low-molecular-weight polyethylene (% by mass) **) The amount based on 100 parts by weight of the total of EPDM and low-malecular-weight polyethylene (parts by weight) | | | | | | |

## Claims

1. A rubber composition for forming a rubber member used in a part which comes into contact with a gaseous or liquid dimethyl ether, comprising:
a ternary copolymer obtained from monomer components comprising ethylene, an α-olefin and a diene compound; and
a low-molecular-weight polyethylene;
wherein the low-molecular-weight polyethylene has a viscosity average molecular weight of 1,000 to 15,000.

2. The rubber composition according to claim 1, wherein the low-molecular-weight polyethylene is present in an amount of 5 to 50 parts by weight based on 100 parts by weight of the ternary copolymer.

3. The rubber composition according to claim 1 or 2, wherein the ternary copolymer has an ethylene content of 55% by mass or more based on the whole monomer components.

4. The rubber composition according to any one of claims 1 to 3, wherein the α-olefin is propylene.

5. A rubber member comprising the rubber composition according to any one of claims 1 to 4.

## Patentansprüche

1. Kautschukzusammensetzung zum Bilden eines Kautschukelements, das in einem Teil verwendet wird, welches in Kontakt mit einem gasförmigen oder flüssigen Dimethylether kommt, umfassend:
ein ternäres Copolymer, erhalten aus Monomerkomponenten, die Ethylen, ein α-Olefin und eine Dienverbindung umfassen; und
ein Polyethylen mit niedrigem Molekulargewicht;
wobei das Polyethylen mit niedrigem Molekulargewicht ein viskositätsgemitteltes Molekulargewicht von 1000 bis 15000 aufweist.

2. Kautschukzusammensetzung nach Anspruch 1, wobei das Polyethylen mit niedrigem Molekulargewicht in einer Menge von 5 bis 50 Gewichtsteilen, bezogen auf 100 Gewichtsteile des ternären Copolymers, vorhanden ist.

3. Kautschukzusammensetzung nach Anspruch 1 oder 2, wobei das ternäre Copolymer einen Ethylengehalt von 55 Massenprozent oder mehr, bezogen auf die gesamten Monomerkomponenten, aufweist.

4. Kautschukzusammensetzung nach einem der Ansprüche 1 bis 3, wobei das α-Olefin Propylen ist.

5. Kautschukelement, umfassend die Kautschukzusammensetzung nach einem der Ansprüche 1 bis 4.

## Revendications

1. Composition de caoutchouc pour former un élément en caoutchouc utilisé dans une pièce qui vient en contact avec un diméthyléther gazeux ou liquide, comprenant :
un copolymère ternaire obtenu à partir de composants monomères comprenant de l'éthylène, une α-oléfine et un composé diénique ; et
un polyéthylène de faible masse moléculaire ;
où le polyéthylène de faible masse moléculaire a une masse moléculaire moyenne en viscosité de 1 000 à 15 000.

2. Composition de caoutchouc selon la revendication 1, où le polyéthylène de faible masse moléculaire est présent en une quantité de 5 à 50 parties en poids sur la base de 100 parties en poids du copolymère ternaire.

3. Composition de caoutchouc selon la revendication 1 ou 2, où le copolymère ternaire a une teneur en éthylène de 55 % en masse ou plus sur la base des composants monomères totaux.

4. Composition de caoutchouc selon l'une quelconque des revendications 1 à 3, où l'α-oléfine est le propylène.

5. Elément en caoutchouc comprenant la composition de caoutchouc selon l'une quelconque des revendications 1 à 4.
